# EUROPEAN PATENT APPLICATION

(11) **EP 4 644 844 A1**
(43) Date of publication of application: **05.11.2025**
(21) Application number: 23910474.8
(22) Date of filing: 25.12.2023
(51) Int. Cl.: G01D 21/00, G01B 21/16

(54) **DETECTION SYSTEM AND DETECTION METHOD**

(30) Priority: 28.12.2022 CN 202211696920
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); LI, Liang, Beijing 100084 (CN); HONG, Mingzhi, Beijing 100084 (CN); WANG, Zinan, Beijing 100084 (CN); XIE, Lei, Beijing 100084 (CN); CHANG, Ming, Beijing 100084 (CN)
(74) Representative: Gunzelmann, Rainer
(86) International application number: PCT/CN2023/141499
(87) International publication number: WO 2024/140548

(57) **Abstract**

An inspection system is provided, including: a conveying mechanism (10), a pushing mechanism (20), a positioning mechanism (30) and an inspection mechanism (40). The conveying mechanism (10) is configured to convey an object to be inspected (200). The pushing mechanism (20) is suitable for pushing the object to be inspected (200) in a conveying direction of the conveying mechanism (10), so as to push the object to be inspected (200) to a first positioning plane (M1) and a second positioning plane (M2). The positioning mechanism (30) includes a positioning portion (31). The positioning portion (31) may move in the conveying direction of the conveying mechanism (10), so as to define the first positioning plane (M1) and the second positioning plane (M2). The object to be inspected (200) abuts against the positioning portion (31) on the first positioning plane (M1) and the second positioning plane (M2). The inspection mechanism (40) is suitable for inspecting the object to be inspected (200) when the object to be inspected (200) is located on the first positioning plane (M1) and the second positioning plane (M2). An inspection method is further provided.

## Description

This application claims priority to Chinese Patent Application No. 202211696920.2, filed on December 28, 2022, the entire content of which is incorporated herein in its entirety by reference.

### TECHNICAL FIELD

The present disclosure relates to a field of inspection, in particular to an inspection system and an inspection method.

### BACKGROUND

At present, in the field of inspection, there is no need to inspect an entire object to be inspected in many scenes, only a certain feature of the object to be inspected needs to be inspected. In some inspection scenes, it is required to perform a nondestructive inspection on a certain feature of left and right sides of the object to be inspected. A thickness of this feature is small, and when manufacturing the object to be inspected, there is an error of ± 1mm on left and right sides of the object to be inspected. Therefore, the following problems are faced in inspection: it is required to accurately locate a position of the feature of the object to be inspected when inspecting the object to be inspected.

### SUMMARY

According to embodiments of the present disclosure, an inspection system includes: a conveying mechanism, a pushing mechanism, a positioning mechanism and an inspection mechanism. The conveying mechanism is configured to convey an object to be inspected. The pushing mechanism is configured to push the object to be inspected in a conveying direction of the conveying mechanism, so as to push the object to be inspected to a first positioning plane and a second positioning plane. The positioning mechanism includes a positioning portion. The positioning portion is movable in the conveying direction of the conveying mechanism, so as to define the first positioning plane and the second positioning plane. The object to be inspected abuts against the positioning portion on the first positioning plane and the second positioning plane. The inspection mechanism is configured to inspect the object to be inspected when the object to be inspected is located on the first positioning plane and the second positioning plane.

In some embodiments, the pushing mechanism includes a first driving device and a pushing device. The first driving device is configured to drive the pushing device to move in the conveying direction of the conveying device, so that the pushing device pushes the object to be inspected to the first positioning plane and the second positioning plane.

Furthermore, the pushing mechanism further includes a first sensor. The first sensor is mounted on the first driving device and is configured to measure a distance between the first sensor and the object to be inspected.

Furthermore, the positioning mechanism further includes a second driving device and a second sensor. The second driving device is configured to drive the positioning portion to switch between the first positioning plane and the second positioning plane. When the second sensor inspects that the object to be inspected does not abut against the positioning portion, the pushing mechanism controls the pushing device to push the object to be inspected, so that the object to be inspected abuts against the positioning portion. When the second sensor inspects that the object to be inspected abuts against the positioning portion and is located on the first positioning plane or the second positioning plane, the inspection mechanism inspects the object to be inspected.

In some embodiments, the pushing mechanism further includes a guide device. The guide device is configured to guide the pushing device to switch between a first state and a second state after the guide device is in contact with the pushing device. When the pushing device is in the first state, the pushing device is configured to push the object to be inspected, and when the pushing device is in the second state, the pushing device is configured to avoid the object to be inspected.

In some embodiments, the positioning mechanism further includes a lifting device. The lifting device is located between the positioning portion and the second driving device and is configured to drive the positioning portion to switch between a third state and a fourth state. When the positioning portion is in the third state, the positioning portion is configured to stop and obstruct the object to be inspected, and when the positioning portion is in the fourth state, the positioning portion is configured to avoid the object to be inspected.

In some embodiments, the inspection system further includes a third sensor. The third sensor is disposed on the conveying mechanism and is configured to determine a position of the object to be inspected on the conveying mechanism.

According to an inspection method of a second embodiment of the present disclosure, the inspection method is applied to the inspection system described above. The inspection method includes:
conveying the object to be inspected to a position between the pushing mechanism and the positioning mechanism by the conveying mechanism;
pushing the object to be inspected to abut against the positioning portion of the positioning mechanism by the pushing mechanism, where the positioning portion is located on the first positioning plane;
performing a first inspection on the object to be inspected by the inspection device;
driving the positioning portion to move from the first positioning plane to the second positioning plane by the positioning mechanism, and pushing the object to be inspected to abut against the positioning portion by the pushing mechanism;
performing a second inspection on the object to be inspected by the inspection device.

In some embodiments, when the conveying mechanism conveys the object to be inspected, whether the object to be inspected reaches a first position is determined by the third sensor. The first position is located between the pushing mechanism and the positioning mechanism. When the object to be inspected reaches the first position, the conveying mechanism stops conveying.

Furthermore, whether the object to be inspected abuts against the positioning portion is determined by the second sensor. When the object to be inspected does not abut against the positioning portion, the first driving device continues to drive the pushing device to move towards the positioning portion.

In some embodiments, the object to be inspected includes a main body portion, two portions to be inspected and two end portions. The two end portions are respectively located at a front end of the main body portion and a rear end of the main body portion in a conveying direction. Each of the two portions to be inspected is located between a respective one of the two end portions and the main body portion. The inspection device is configured to inspect whether the portion to be inspected meets a requirement. A distance between the pushing device at an initial position and the first positioning plane is c. A size of the portions to be inspected of the object to be inspected is e. A size of the end portions is f. When the object to be inspected is on the first positioning plane, a distance between the first sensor and the object to be inspected is t,
a width of the object to be inspected is b, and the distance x between the first positioning plane and the second positioning plane is calculated by:
determining the width b of the object to be inspected by b=c-t; and
determining the distance x between the first positioning plane and the second positioning plane by x=b-(e/2+f).

Furthermore, the inspection method further includes:
switching from the third state to the fourth state by the lifting device, after the inspection device performs the second inspection on the object to be inspected;
continuing to convey the object to be inspected forward by the conveying mechanism for subsequent work.

Furthermore, alternatively, the inspection method further includes:
driving the pushing device to move by the first driving device, after the inspection device performs the second inspection on the object to be inspected, so that the driving device switches from the first state to the second state;
conveying the object to be inspected backwards by the conveying mechanism for subsequent work.

Additional aspects and advantages of the present disclosure will be provided in part in the following description, and in part will become obvious from the following description, or will be learned through practice of the present disclosure.

### BRIEF DESCRIPTION OF THE DRAWINGS

The above-mentioned and/or additional aspects and advantages of the present disclosure will be obvious and easy to understand from the description of embodiments in conjunction with the following drawings, in which:
FIG. 1 is a top view of an inspection system of embodiments of the present disclosure.
FIG. 2 is a three-dimensional schematic diagram of a pushing mechanism of an inspection system of embodiments of the present disclosure.
FIG. 3 is a three-dimensional schematic diagram of a positioning mechanism of an inspection system of embodiments of the present disclosure.
FIG. 4 is a schematic diagram of a structure of an object to be inspected.
FIG. 5 is a schematic diagram of conveying an object to be inspected by a conveying mechanism of an inspection system of embodiments of the present disclosure.
FIG. 6 is a schematic diagram of inspecting an object to be inspected by an inspection system on a first positioning plane of embodiments of the present disclosure.
FIG. 7 is a schematic diagram of inspecting an object to be inspected by an inspection system on a second positioning plane of embodiments of the present disclosure.

References numerals:
inspection system 100,
conveying mechanism 10,
pushing mechanism 20, first driving device 21, pushing device 22, guide rod 221, first sensor 23, guide device 24, guide groove 241,
positioning mechanism 30, positioning portion 31, second driving device 32, second sensor 33, lifting device 35,
inspection mechanism 40,
third sensor 50,
first positioning plane M1, second positioning plane M2,
object to be inspected 200,
main body portion 210, portion to be inspected 220, end portion 230.

### DETAILED DESCRIPTION OF EMBODIMENTS

Embodiments of the present disclosure are described in detail below, examples of which are shown in the accompanying drawings, where same or similar reference numerals throughout represent the same or similar elements or elements having the same or similar functions. The embodiments described below with reference to the accompanying drawings are exemplary and are only used to explain the present disclosure, and may not be understood as limiting the present disclosure.

In the description of the present disclosure, it should be understood that orientations or position relationships indicated by the terms "center", "longitudinal", "lateral", "length", "width", "thickness", "upper", "lower", "front", "back", "left", "right", "vertical", "horizontal", "top", "bottom", "inside", "outside", "clockwise", "counterclockwise", "axial", "radial", "peripheral", etc. are based on the orientations or position relationships shown in the drawings, and are only for the convenience of describing the present disclosure and simplifying the description, rather than indicating or implying that the device or element referred to must have a specific orientation, be constructed and operated in a specific orientation, therefore it may not be understood as a limitation on the present disclosure. In addition, features limited to "first" and "second" may explicitly or implicitly include one or more of these features. In the description of the present disclosure, unless otherwise specified, the meaning of "plurality of" is two or more.

In the description of the present disclosure, it should be noted that unless otherwise specified and limited, the terms "mounted", "connected" and "connection" should be broadly understood. For example, it may be a fixed connection, a detachable connection, or an integrated connection. It may be a mechanical connection or an electrical connection. It may be directly connected, or indirectly connected through an intermediate medium. It may be an internal connection between two elements. For those of skill in the art, specific meanings of the terms described above in the present disclosure may be understood based on specific circumstances.

The present disclosure proposes an inspection system. The inspection system may accurately locate a position of a feature of an object to be inspected when inspecting the object to be inspected, thereby improving the inspection effect.

According to an inspection system of embodiments of the present disclosure, when the inspection system inspects the object to be inspected, a conveying mechanism first conveys the object to be inspected. When the object to be inspected is conveyed to a position between a pushing mechanism and a positioning mechanism, the pushing mechanism pushes the object to be inspected. At the same time, a positioning portion of the positioning mechanism is fixed on a first positioning plane, and the pushing mechanism pushes the object to be inspected close to the positioning portion in a conveying direction of the conveying mechanism, until the object to be inspected abuts against the positioning portion. At this time, a front surface of the object to be inspected is located on a first positioning plane, a part to be inspected of a front part of the object to be inspected is facing to the inspection mechanism, and the inspection mechanism inspects the object to be inspected. Then, the positioning mechanism moves away from the pushing mechanism, so that the positioning portion is moved to a second positioning plane and is fixed here. The pushing mechanism pushes the object to be inspected to continue to move close to the positioning portion in the conveying direction, until the object to be inspected abuts against the positioning portion again. At this time, the front surface of the object to be inspected is located on the second positioning plane, and a part to be inspected of a rear part of the object to be inspected is facing to the inspection mechanism. The inspection mechanism inspects the object to be inspected, so as to complete the inspection process. Therefore, through a cooperation of the positioning mechanism and the pushing mechanism, it is possible to accurately position a part to be inspected of the object to be inspected, thereby improving the inspection effect of the inspection system.

The present disclosure also aims to propose an inspection method using the aforementioned inspection system to inspect the object to be inspected.

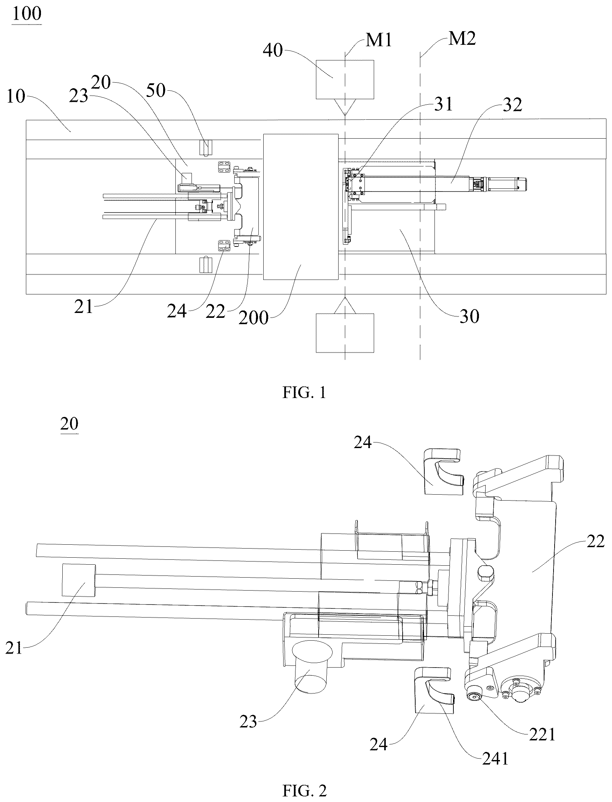

With reference to FIG. 1 to FIG. 7, an inspection system 100 and an inspection method according to the embodiments of the present disclosure will be described below.

As shown in FIG. 1, the inspection system 100 according to the embodiments of the present disclosure includes: a conveying mechanism 10, a pushing mechanism 20, a positioning mechanism 30 and an inspection mechanism 40.

The conveying mechanism 10 is configured to convey an object to be inspected 200. The pushing mechanism 20 is suitable for pushing the object to be inspected 200 in a conveying direction of the conveying mechanism 10, so as to push the object to be inspected 200 to a first positioning plane M1 and a second positioning plane M2. The positioning mechanism 30 includes a positioning portion 31. The positioning portion 31 is movable in the conveying direction of the conveying mechanism 10, so as to define the first positioning plane M1 and the second positioning plane M2. The object to be inspected 200 abuts against the positioning portion 31 on the first positioning plane M1 or the second positioning plane M2. The inspection mechanism 40 is suitable for inspecting the object to be inspected 200 when the object to be inspected 200 is located on the first positioning plane M1 or the second positioning plane M2.

Specifically, when the inspection system 100 inspects the object to be inspected 200, the conveying mechanism 10 first conveys the object to be inspected 200. When the object to be inspected 200 is conveyed to a position between the pushing mechanism 20 and the positioning mechanism 30, the pushing mechanism 20 pushes the object to be inspected 200. At the same time, the positioning portion 31 of the positioning mechanism 30 is fixed on the first positioning plane M1. The pushing mechanism 20 pushes the object to be inspected 200 to move close to the positioning portion 31 in the conveying direction of the conveying mechanism 10, until the object to be inspected 200 abuts against the positioning portion 31. At this time, a front surface of the object to be inspected 200 is located on the first positioning plane M1, and a part to be inspected of a front part of the object to be inspected 200 is facing to the inspection mechanism 40. The inspection mechanism 40 inspects the object to be inspected 200. Then, the positioning mechanism 30 moves away from the pushing mechanism, so that the positioning portion 31 is moved to the second positioning plane M2 and is fixed here. The pushing mechanism 20 pushes the object to be inspected 200 to continue to move close to the positioning portion 31 in the conveying direction, until the object to be inspected 200 abuts against the positioning portion 31 again. At this time, the front surface of the object to be inspected 200 is located on the second positioning plane M2, and a part to be inspected of a rear part of the object to be inspected 200 is facing to the inspection mechanism 40. The inspection mechanism 40 inspects the object to be inspected 200, so as to complete the inspection process.

According to the inspection system 100 of the embodiments of the present disclosure, through the cooperation of the positioning mechanism 30 and the pushing mechanism 20, it is possible to accurately position the part to be inspected of the object to be inspected 200, thereby improving the inspection effect of the inspection system 100.

It should be noted that the inspection mechanism 40 is fixedly disposed in the conveying direction of the conveying mechanism 10. There are no specific restrictions on a fixing method of the inspection mechanism 40. The inspection mechanism 40 may be fixedly disposed on the conveying mechanism 10, may be movable in a direction perpendicular to the conveying direction, or may perform a circular motion around the conveying mechanism 10 in a plane perpendicular to the conveying direction, as long as the inspection mechanism 40 and the conveying mechanism 10 are relatively fixed in the conveying direction.

When the inspection mechanism 40 is movable in the direction perpendicular to the conveying direction, the object to be inspected 200 is first pushed to the first positioning plane M1 or the second positioning plane M2 by the pushing mechanism 20. The inspection mechanism 40 may move vertically, so as to inspect side surfaces of the object to be inspected 200. An inspection area may be increased by the vertical movement of the inspection mechanism 40, thereby improving the inspection effect of the inspection system 100.

When the inspection institution 40 performs a circular motion around the conveying mechanism 10 in the plane perpendicular to the conveying direction, the object to be inspected 200 is first pushed to the first positioning plane M1 or the second positioning plane M2 by the pushing mechanism 20. The inspection mechanism 40 makes a circle around the object to be inspected 200, so as to perform a comprehensive inspection of the object to be inspected 200, thereby increasing the inspection area and improving the inspection effect of the inspection system 100.

As shown in FIG. 2, in some embodiments, the pushing mechanism 20 includes a first driving device 21 and a pushing device 22. The first driving device 21 is suitable for driving the pushing device 22 to move in the conveying direction of the conveying device, so that the pushing device 22 pushes the object to be inspected 200 to the first positioning plane M1 and the second positioning plane M2.

Specifically, the first driving device 21 may provide a power for the pushing device 22. When the object to be inspected 200 is conveyed to a position between the pushing mechanism 20 and the positioning mechanism 30 by the conveying mechanism 10, the pushing device 22 may push the object to be inspected 200 towards the first positioning plane M1 under a driving of the first driving device 21. The positioning portion 31 of the positioning mechanism 30 is located on the first positioning plane M1. When the pushing device 22 pushes the object to be inspected 200 to the positioning mechanism 30, the front surface of the object to be inspected 200 coincides with the first positioning plane M1, and abuts against the positioning portion 31. The inspection mechanism 40 may inspect the object to be inspected 200. Then, the positioning mechanism 30 moves to the second positioning plane M2. The first driving device 21 drives the pushing device 22 to continue to push the object to be inspected 200 to the second positioning plane M2. The inspection mechanism 40 inspects the object to be inspected 200 again, so as to complete the inspection work of the inspection system 100 on the object to be inspected 200. After the inspection is completed, the first driving device 21 may drive the pushing device 22 to return to an initial position and push another object to be inspected 200.

Therefore, the pushing device 22 may switch between the initial position, the first positioning plane M1 and the second positioning plane M2 by the first driving device 21, and the object to be inspected 200 may stably move to the first positioning plane M1 and the second positioning plane M2 by the first driving device 21, thereby improving the inspection effect of the inspection system 100.

As shown in FIG. 1 to FIG. 2, furthermore, the pushing mechanism 20 further includes at least one first sensor 23. The first sensor 23 is mounted on the first driving device 21 and is suitable for measuring a distance to the object to be inspected 200.

Specifically, the first sensor 23 may measure a distance between the pushing mechanism 20 and the object to be inspected 200. Since there is an error when manufacturing the object to be inspected 200, a size of the error of each object to be inspected 200 may be different. Therefore, it is needed to exclude the size of the error when inspecting. Additionally, since a thickness of the feature to be inspected is small and the feature to be inspected is located at two ends of the object to be inspected 200, for ensuring the inspection accuracy, the pushing mechanism 20 first pushes the object to be inspected 200 to the first positioning plane M1, to inspect the feature to be inspected at the front part of the object, and the distance between the second positioning plane M2 and the first positioning plane M1 is calculated based on data measured by the first sensor 23, so as to determine the specific position of the second positioning plane M2. Then, the pushing mechanism 20 pushes the object to be inspected 200 to the second positioning plane M2 and perform the inspection on the object to be inspected 200.

Therefore, based on the data measured by the first sensor 23, the position of the second positioning plane M2 may be determined, thereby allowing the inspection of the object to be inspected 200 performed by the inspection system 100 to be more accurate.

It should be noted that there are no specific restrictions on types of the first sensor 23. The first sensor 23 may include an infrared ranging sensor, a laser ranging sensor, an ultrasonic ranging sensor, or a millimeter wave radar sensor, as long as the distance to the object to be inspected 200 may be accurately measured, which may be selected according to actual requirements.

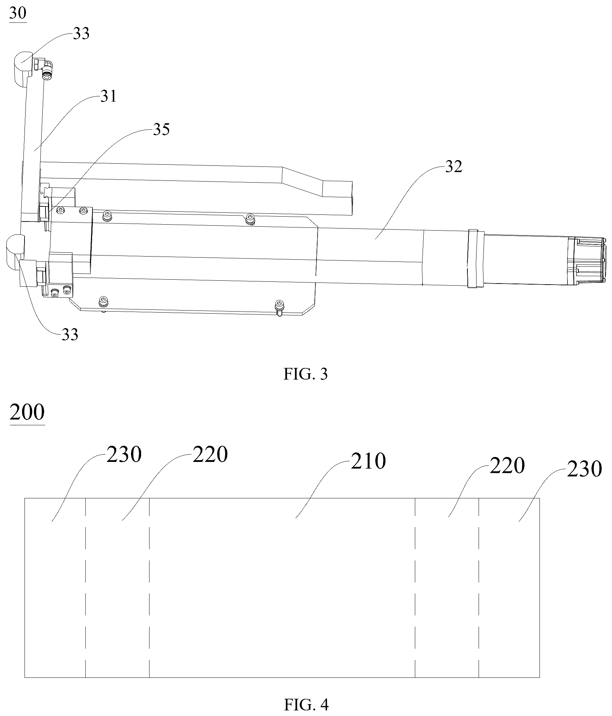

As shown in FIG. 3, furthermore, the positioning mechanism 30 further includes a second driving device 32 and at least one second sensor 33. The second driving device 32 may drive the positioning portion 31 to switch between a first positioning plane M1 and a second positioning plane M2. When the second sensor 33 inspects that the object to be inspected 200 does not abut against the positioning portion 31, the pushing mechanism 20 controls the pushing device 22 to push the object to be inspected 200, so that the object to be inspected 200 abuts against the positioning portion 31. When the second sensor 33 inspects that the object to be inspected 200 abuts against the positioning portion 31 and is located on the first positioning plane M1 or the second positioning plane M2, the inspection mechanism 40 inspects the object to be inspected 200.

Specifically, the second driving device 32 may provide a power for the positioning portion 31. After the object to be inspected 200 is inspected on the first positioning plane M1, the second driving device drives the positioning portion 31 to move towards the second positioning plane M2, and to abut the object to be inspected 200 on the second positioning plane M2. The second sensor 33 may inspect whether the object to be inspected 200 is in contact with the positioning portion 31, so as to determine whether the object to be inspected 200 abuts against the positioning portion 31.

Taking the inspection of the object to be inspected 200 on the first positioning plane M1 as an example, when the pushing mechanism 20 pushes the object to be inspected 200 to the first positioning plane M1, the positioning portion 31 of the positioning mechanism 30 is located on the first positioning plane M1, and the second sensor 33 performs the inspection. If it is inspected that the object to be inspected 200 does not abut against the positioning portion 31, the inspection system 100 controls the first driver to continue to drive the pushing device 22, so that the object to be inspected 200 continues to move towards the first positioning plane M1. When the second sensor 33 inspects that the object to be inspected 200 abuts against the positioning portion 31, the inspection mechanism 40 inspects the object to be inspected 200. The object to be inspected 200 is inspected on a second positioning portion 31 in the same way.

Therefore, the position of the object to be inspected 200 may be determined by the second sensor 33, thereby improving the inspection accuracy of the inspection system 100.

It should be noted that there are no specific restrictions on types of the second sensor 33. The second sensor 33 may include a contact switcher or a piezoelectric switcher, which may be selected according to actual needs.

As shown in FIG. 2, in some embodiments, the pushing mechanism 20 further includes guide devices 24. After the guide device 24 is in contact with the pushing device 22, the pushing device 22 may be guided to switch between a first state and a second state. When the pushing device 22 is in the first state, the pushing device 22 may push the object to be inspected 200. When the pushing device 22 is in the second state, the pushing device 22 may avoid the object to be inspected 200.

Specifically, the conveying mechanism 10 is provided with two guide rails. The guide rails may convey the object to be inspected 200. The pushing mechanism 20 is disposed in an interval between the two guide rails. The first driving device 21 is fixed relative to the conveying mechanism 10, and drives the pushing device 22 to change positions. When inspecting the object to be inspected 200 by the inspection system 100, a highest point of the pushing device 22 in the first state is higher than upper surfaces of the guide rails. At this time, the pushing device 22 may push the object to be inspected 200, so as to complete the inspection on the first positioning plane M1 or the second positioning plane M2. When the inspection of the object to be inspected 200 fails and a return operation is required, the guide device 24 may guide the pushing device 22 to switch from the first state to the second state. A highest point of the pushing device 22 in the second state is lower than the upper surfaces of the guide rails. At this time, the pushing device 22 may avoid the object to be inspected 200, so that the return operation of the object to be inspected 200 may be successfully completed.

Therefore, through guiding the pushing device 22 by the guide device 24, the inspection efficiency of the inspection system 100 may be improved.

Optionally, the guide device 24 includes a guide groove 241. A guide rod 221 is provided on the pushing device 22. The guide rod 221 may drive the pushing device 22 to move under a guiding of the guide groove 241.

Specifically, when the pushing device 22 switches states under the guiding of the guide device 24, the guide rod 221 is first in contact with the guide groove 241. Then, under the guiding of the guide groove 241, the guide rod 221 may move according to a shape of the guide groove 241. Finally, the pushing device 22 is allowed to switch from the first state to the second state or from the second state to the first state. When the pushing device 22 switches states, the guide rod 221 always maintains in contact with the guide groove 241. The guide groove 241 may constrain a movement trajectory of the guide rod 221.

Therefore, through a cooperation between the guide rod 221 and the guide groove 241, the switching of the pushing device 22 between the first state and the second state may be more stable, thereby improving the reliability of the pushing mechanism 20.

As shown in FIG. 3, in some embodiments, the positioning mechanism further includes a lifting device 35. The lifting device 35 is provided between the positioning portion 31 and the second driving device 32, and is suitable for driving the positioning portion 31 to switch between the third state and the fourth state. When the positioning portion 31 is in the third state, the object to be inspected 200 may be stopped and obstructed. When the positioning portion 31 is in the fourth state, the positioning portion 31 avoids the object to be inspected 200.

Specifically, the conveying mechanism 10 is provided with two guide rails. The guide rails may transmit the object to be inspected 200. The positioning mechanism 30 is disposed at an interval between the two guide rails. The second driving device 32 is fixed relative to the conveying mechanism 10, and drives the positioning portion 31 to move between the first positioning plane M1 and the second positioning plane M2. The lifting device 35 may control the positioning portion 31 to be lifted and lowered, so that the positioning portion 31 switches between the third state and the fourth state. When the positioning portion 31 is in the third state, a height of the highest point of the positioning portion 31 is higher than the upper surfaces of the guide rails. When the positioning portion 31 is in the fourth state, the height of the highest point of the positioning portion 31 is lower than the upper surfaces of the guide rails.

When inspecting the object to be inspected 200 by the inspection system 100, the positioning portion 31 may stop and obstruct the object to be inspected 200 on the first positioning plane M1 and the second positioning plane M2, and at this time, the positioning portion 31 is in the third state. After the inspection of the object to be inspected 200 on the second positioning plane M2 is completed, the lifting device 35 may control the positioning portion 31 to switch from the third state to the fourth state. At this time, the positioning portion 31 may avoid the object to be inspected 200, and the conveying mechanism 10 may transmit the object to be inspected 200, so as to enter a next process.

Therefore, through controlling the positioning portion 31 by the lifting device 35, the inspection efficiency of the inspection system 100 may be improved.

It should be noted that there are no specific restrictions on a movement trajectory of the lifting device 35 when controlling the positioning portion 31 for switching states. The lifting device 35 may control the positioning portion 31 to switch between the third state and the fourth state through lifting and lowering. The lifting device 35 may also control the positioning portion 31 to switch between the third state and the fourth state through rotation.

As shown in FIG. 1, in some embodiments, the inspection system 100 further includes at least one third sensor 50. The third sensor 50 is provided on the conveying mechanism 10 and is suitable for determining the position of the object to be inspected 200 on the conveying mechanism 10.

Specifically, the third sensor 50 may inspect the position of the object to be inspected 200 on the conveying mechanism 10. The conveying mechanism 10 conveys the object to be inspected 200. When the third sensor 50 inspects that the object to be inspected 200 moves to a position between the pushing mechanism 20 and the positioning mechanism 30, the conveying mechanism 10 stops conveying, and then the pushing mechanism 20 pushes the object to be inspected 200. When the object to be inspected 200 is pushed to the first positioning plane M1, the first sensor 23 measures the distance between the first sensor 23 and the object to be inspected 200, thereby calculating the position of the second positioning plane M2, which may cause the inspection system 100 to be more accurate.

Therefore, the transmission efficiency of the conveying mechanism 10 to the object to be inspected 200 is relatively high, but the accuracy is poor. Through determining the position of the object to be inspected 200 by the third sensor 50, the inspection accuracy of the inspection system 100 may be ensured while improving the inspection efficiency.

It should be noted that there are no specific restrictions on types of the third sensor 50 here. The types of the third sensor 50 may include a proximity switch, a photoelectric sensor, or an ultrasonic sensor, which may be selected according to actual needs.

According to an inspection method of a second embodiment of the present disclosure, the inspection method is applied to the implementation of the inspection system 100 of the above embodiments. The inspection method includes steps as follow.

The conveying mechanism 10 conveys the object to be inspected 200 to a position between the pushing mechanism 20 and the positioning mechanism 30.

The positioning portion 31 of the positioning mechanism 30 is located on the first positioning plane M1, and the pushing mechanism 20 pushes the object to be inspected 200 to abut against the positioning portion 31.

The inspection device performs a first inspection on the object to be inspected 200.

The positioning mechanism 30 drives the positioning portion 31 to move from the first positioning plane M1 to the second positioning plane M2, and the pushing mechanism 20 pushes the object to be inspected 200 to abut against the positioning portion 31.

The inspection device performs a second inspection on the object to be inspected 200.

Taking the inspection system 100 according to FIG. 1 to FIG.7 as an example, the structure and inspection method of the inspection system 100 of the present disclosure will be explained in detail below.

As shown in FIG. 1 to FIG. 3, the inspection system 100 includes: a conveying mechanism 10, a pushing mechanism 20, a positioning mechanism 30, an inspection mechanism 40 and at least one third sensor 50.

The conveying mechanism 10 is configured to convey the object to be inspected 200. The pushing mechanism 20 is provided on the conveying mechanism 10. The pushing mechanism 10 includes: a first driving device 21, a pushing device 22, a first sensor 23 and a guide device 24. The first driving device 21 is configured to drive the pushing device 22 to move in a conveying direction of the conveying device, so that the pushing device 22 pushes the object to be inspected 200 to the first positioning plane M1 or the second positioning plane M2. The first sensor 23 is mounted on the first driving device 21, and is configured to measure a distance between the first sensor 23 and the object to be inspected 200, so as to calculate a specific position of the second positioning plane M2 according to a size of the object to be inspected 200. The guide device 24 may guide the pushing device 22, so that the pushing device 22 may switch between the first state and the second state. When being in the first state, the pushing device 22 may push the object to be inspected 200. When being in the second state, the pushing device 22 may avoid the object to be inspected 200.

The positioning mechanism 30 is also provided on the conveying mechanism 10. The positioning mechanism 10 includes a positioning portion 31, a second driver, at least one second sensor 33 and a lifting device 35. When the object to be inspected 200 is on the first positioning plane M1 or the second positioning plane M2, the positioning portion 31 may stop and obstruct the object to be inspected 200. The second driving device 32 may drive the positioning portion 31 to switch between the first positioning plane M1 and the second positioning plane M2. The second sensor 33 may determine whether the object to be inspected 200 abuts against the positioning portion 31. The lifting device 35 is provided between the positioning portion 31 and the second driving device 32, and is configured to drive the positioning portion 31 to switch between the third state and the second state. When being in the third state, the positioning portion 31 may stop and obstruct the object to be inspected 200. When being in the fourth state, the positioning portion 31 may avoid the object to be inspected 200.

As shown in FIG. 4, the object to be inspected 200 includes: a main body portion 210, two portions to be inspected 220 and two end portions 230. The two end portions 230 are respectively located at a front end and a rear end of the main body portion 210 in the conveying direction. Each of the two portions to be inspected 220 is located between a respective one of the two end portions 230 and the main body portion 210. The inspection device is configured to inspect whether the portion to be inspected 220 meets a requirement.

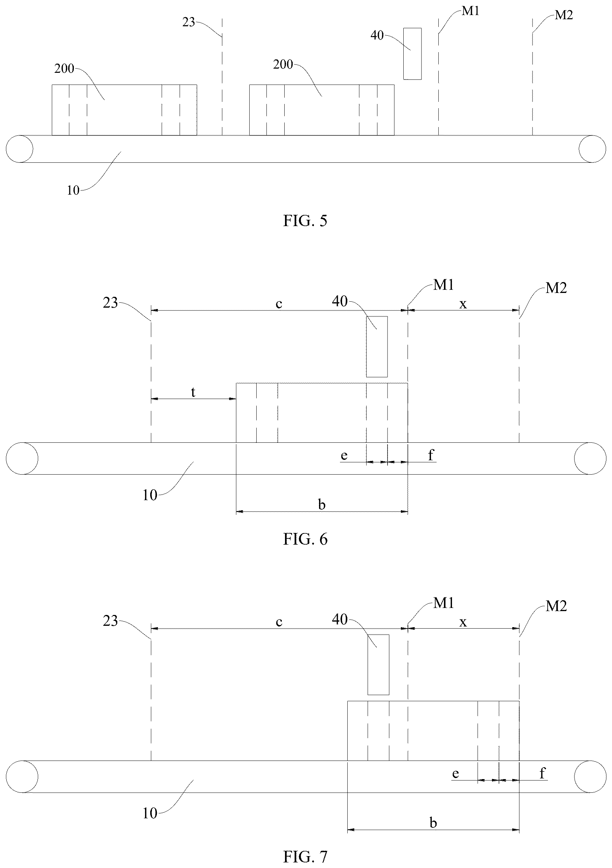

As shown in FIG. 6, for the sake of convenience, when inspecting the object to be inspected 200, the inspection system 100 has parameters of sizes as follows: a distance between the pushing device 22 at an initial position and the first positioning plane M1 is c, a size of the portions to be inspected 220 of the object to be inspected 200 is e, a size of the end portions 230 is f, a distance between the first sensor 23 and the object to be inspected 200 is t when the object to be inspected 200 is on the first positioning plane M1, a width of the object to be inspected 200 is b, and a distance between the first positioning plane M1 and the second positioning plane M2 is x.

When the inspection system 100 inspects the object to be inspected 200, the method includes the following operations.

As shown in FIG. 5, the conveying mechanism 10 conveys the object to be inspected 200. The third sensor 50 determines whether the object to be inspected 200 has reached a first position. The first position is located between the pushing mechanism 20 and the positioning mechanism 30. When the object to be inspected 200 reaches the first position, the conveying mechanism 10 stops conveying.

As shown in FIG. 6, the positioning portion 31 of the positioning mechanism 30 is located on the first positioning plane M1. The first driving device 21 of the pushing mechanism 20 drives the pushing device 22 to push the object to be inspected 200 to the first positioning plane M1, so that the front end of the object to be inspected 200 abuts against the positioning portion 31.

The second sensor 33 determines whether the object to be inspected 200 abuts against the positioning portion 31. If the object to be inspected 200 does not abut against the positioning portion 31, the first driving device 21 continues to drive the pushing device 22 to move towards the positioning portion 31.

The inspection device performs a first inspection on the object to be inspected 200.

The first sensor 23 inspects a distance t between the first sensor 23 and the object to be inspected 200. A width of the object to be inspected 200 is b=c-t. A distance between the first positioning plane M1 and the second positioning plane M2 is x=b-(e/2+f).

As shown in FIG. 7, the second driving device 32 of the positioning mechanism 30 drives the positioning portion 31 to move from the first positioning plane M1 to the second positioning plane M2. The first driving device 21 of the pushing mechanism drives the pushing device 22 to push the object to be inspected 200 to the second positioning plane M2, so that the front end of the object to be inspected 200 abuts against the positioning portion 31.

The second sensor 33 determines whether the object to be inspected 200 abuts against the positioning portion 31. If the object to be inspected 200 does not abut against the positioning portion 31, the first driving device 21 continues to drive the pushing device 22 to move towards the positioning portion 31.

The inspection device performs a second inspection on the object to be inspected 200.

The inspection is completed.

After the inspection is completed, the object to be inspected 200 may be transported to different positions according to actual needs of manufacturing, including methods as follow.

Furthermore, after the inspection device performs the second inspection on the object to be inspected 200, the lifting device 35 switches from the third state to the fourth state. The conveying mechanism 10 continues to convey the object to be inspected 200 forward for subsequent work.

Alternatively, after the inspection device performs the second inspection on the object to be inspected 200, the first driving device 21 drives the pushing device 22 to move, causing the driving device to switch from the first state to the second state. The conveying mechanism 10 conveys the object to be inspected 200 backwards for subsequent work.

Other components of the inspection system 100 according to the embodiments of the present disclosure, such as control system and operations, are known to those of skill in the art, which will not be described in detail here.

In the description of the specification, the reference terms "embodiment", "example", etc. refer to specific features, structures, materials, or characteristics described in conjunction with the embodiment or example, which are included in at least one embodiment or example of the present disclosure. In the specification, the illustrative expressions of the above terms may not necessarily refer to same embodiments or examples. Moreover, the specific features, structures, materials, or characteristics described may be combined in an appropriate manner in any one or more embodiments or examples.

Although the embodiments of the present disclosure have been shown and described, those of skill in the art may understand that various changes, modifications, substitutions and variations may be made to these embodiments without departing from principles and purposes of the present disclosure, and scope of the present disclosure is limited by the claims and their equivalents.

## Claims

1. An inspection system, comprising:
a conveying mechanism (10) configured to convey an object to be inspected (200);
a pushing mechanism (20) configured to push the object to be inspected (200) in a conveying direction of the conveying mechanism (10), so as to push the object to be inspected (200) to a first positioning plane (M1) and a second positioning plane (M2);
a positioning mechanism (30), wherein the positioning mechanism (30) comprises a positioning portion (31), and the positioning portion (31) is movable in the conveying direction of the conveying mechanism (10), so as to define the first positioning plane (M1) and the second positioning plane (M2), and the object to be inspected (200) abuts against the positioning portion (31) on the first positioning plane (M1) and the second positioning plane (M2); and
an inspection mechanism (40) configured to inspect the object to be inspected (200) when the object to be inspected (200) is located on the first positioning plane (M1) and the second positioning plane (M2).

2. The inspection system of claim 1, wherein the pushing mechanism (20) comprises a first driving device (21) and a pushing device (22), the first driving device (21) is configured to drive the pushing device (22) to move in the conveying direction of the conveying device, so that the pushing device (22) pushes the object to be inspected (200) to the first positioning plane (M1) and the second positioning plane (M2).

3. The inspection system of claim 2, wherein the pushing mechanism (20) further comprises a first sensor (23), and the first sensor (23) is mounted on the first driving device (21) and is configured to measure a distance between the first sensor (23) and the object to be inspected (200).

4. The inspection system of claim 3, wherein the positioning mechanism (30) further comprises a second driving device (32) and a second sensor (33), the second driving device (32) is configured to drive the positioning portion (31) to switch between the first positioning plane (M1) and the second positioning plane (M2);
when the second sensor (33) inspects that the object to be inspected (200) does not abut against the positioning portion (31), the pushing mechanism (20) controls the pushing device (22) to push the object to be inspected (200), so that the object to be inspected (200) abuts against the positioning portion (31); and
when the second sensor (33) inspects that the object to be inspected (200) abuts against the positioning portion (31) and is located on the first positioning plane (M1) or the second positioning plane (M2), the inspection mechanism (40) inspects the object to be inspected (200).

5. The inspection system of claim 2, wherein the pushing mechanism (20) further comprises a guide device (24), the guide device (24) is configured to guide the pushing device (22) to switch between a first state and a second state after the guide device (24) is in contact with the pushing device (22), wherein when the pushing device (22) is in the first state, the pushing device (22) is configured to push the object to be inspected (200), and when the pushing device (22) is in the second state, the pushing device (22) is configured to avoid the object to be inspected (200).

6. The inspection system of claim 4, wherein the positioning mechanism (30) further comprises a lifting device (35), the lifting device (35) is located between the positioning portion (31) and the second driving device (32) and is configured to drive the positioning portion (31) to switch between a third state and a fourth state, wherein when the positioning portion (31) is in the third state, the positioning portion (31) is configured to stop and obstruct the object to be inspected (200), and when the positioning portion (31) is in the fourth state, the positioning portion (31) is configured to avoid the object to be inspected (200).

7. The inspection system of claim 1, further comprising: a third sensor (50), the third sensor (50) is disposed on the conveying mechanism (10) and is configured to determine a position of the object to be inspected (200) on the conveying mechanism (10).

8. An inspection method applied to an inspection system (100) of any one of claims 1 to 7, wherein the inspection method comprises:
conveying the object to be inspected (200) to a position between the pushing mechanism (20) and the positioning mechanism (30) by the conveying mechanism (10);
pushing the object to be inspected (200) to abut against the positioning portion (31) of the positioning mechanism (30) by the pushing mechanism (20), wherein the positioning portion (31) is located on the first positioning plane (M1);
performing a first inspection on the object to be inspected (200) by an inspection device;
driving the positioning portion (31) to move from the first positioning plane (M1) to the second positioning plane (M2) by the positioning mechanism (30), and pushing the object to be inspected (200) to abut against the positioning portion (31) by the pushing mechanism (20);
performing a second inspection on the object to be inspected (200) by the inspection device.

9. The inspection method of claim 8, comprising:
determining whether the object to be inspected (200) reaches a first position by the third sensor (50) when the conveying mechanism (10) conveys the object to be inspected (200), wherein the first position is located between the pushing mechanism (20) and the positioning mechanism (30),
stopping conveying by the conveying mechanism (10) when the object to be inspected (200) reaches the first position.

10. The inspection method of claim 8, comprising:
determining whether the object to be inspected (200) abuts against the positioning portion (31) by the second sensor (33),
continuing to drive the pushing device (22) to move towards the positioning portion (31) by the first driving device (21), when the object to be inspected (200) does not abut against the positioning portion (31).

11. The inspection method of claim 8, wherein the object to be inspected (200) comprises a main body portion (210), two portions to be inspected (220) and two end portions (230), the two end portions (230) are respectively located at a front end of the main body portion (210) and a rear end of the main body portion (210) in a conveying direction, each of the two portions to be inspected (220) is located between a respective one of the two end portions (230) and the main body portion (210), the inspection device is configured to inspect whether the portion to be inspected (220) meets a requirement, wherein a distance between the pushing device (22) at an initial position and the first positioning plane (M1) is c, a size of the portions to be inspected (220) of the object to be inspected (200) is e, a size of the end portions (230) is f, and when the object to be inspected (200) is on the first positioning plane (M1), a distance between the first sensor (23) and the object to be inspected (200) is t,
a width of the object to be inspected (200) is b, and a distance x between the first positioning plane (M1) and the second positioning plane (M2) is calculated by:
determining the width b of the object to be inspected (200) by b=c-t; and
determining the distance x between the first positioning plane (M1) and the second positioning plane (M2) by x=b-(e/2+f).

12. The inspection method of claim 8, further comprising:
switching from the third state to the fourth state by the lifting device (35), after the inspection device performs the second inspection on the object to be inspected (200);
continuing to convey the object to be inspected (200) forward by the conveying mechanism (10) for subsequent work.

13. The inspection method of claim 8, further comprising:
driving the pushing device (22) to move by the first driving device (21), after the inspection device performs the second inspection on the object to be inspected (200), so that the driving device switches from the first state to the second state;
conveying the object to be inspected (200) backwards by the conveying mechanism (10) for subsequent work.
